# EUROPÄISCHE PATENTANMELDUNG

(11) **EP 3 992 169 A1**
(43) Veröffentlichungstag der Anmeldung: **04.05.2022**
(21) Anmeldenummer: 21206158.4
(22) Anmeldetag: 03.11.2021
(51) Int. Cl.: C04B 35/115, C04B 35/64, C04B 41/85

(54) **GEFÄRBTE TECHNISCHE KORUND-KERAMIK UND VERFAHREN ZU DEREN HERSTELLUNG**

(30) Priorität: 03.11.2020 DE 102020128886
(71) Anmelder: Polycrystal design GmbH, 01067 Dresden (DE)
(72) Erfinder: Klimke, Herrn Dr.rer.nat. Jens, 01309 Dresden (DE)
(74) Vertreter: Sperling, Thomas

(57) **Zusammenfassung**

Die Erfindung betrifft eine gefärbte technische Korund-Keramik mit einer durch farbgebende Licht absorbierende Dotierungen gebildeten Farbkomponente der Farbe, die sich zumindest innerhalb einer Oberflächenschicht der Korund-Keramik befindet, und einer unterhalb der Farbkomponente liegenden Weißkomponente der Farbe, wobei die gefärbte Korund-Keramik eine Dichte von 99,3 bis 99,9 %, bezogen auf eine Dichte einer porenfreien Keramik der entsprechenden Zusammensetzung als 100%, aufweist. Die gefärbte technische Korund-Keramik enthält 0,001 Massen-% bis 0,5 Massen-% der farbgebenden, Licht absorbierenden Dotierungen sowie 0,1 bis 0,7 Volumen-% Streuzentren, die aus Poren und/oder Partikeln gebildet sind, wobei der Brechungsindex vom Brechungsindex der die Streuzentren umgebenden Bereiche der Korund-Keramik abweicht und wobei die Streuzentren die Weißkomponente der Farbe bereitstellen. Darüber hinaus betrifft die Erfindung noch ein Verfahren zur Herstellung einer entsprechenden gefärbten technischen Korund-Keramik.

Die Erfindung ermöglicht die Realisierung einer vollständigen Farbauswahl für technische Keramik aus Korund durch ein vergleichsweise einfaches Verfahren.

## Beschreibung

Die Erfindung betrifft gefärbte technische Korund-Keramiken mit hoher Härte und Festigkeit in allen Grundfarben sowie Mischungen der Grundfarben. Darüber hinaus betrifft die Erfindung ein Verfahren zur Herstellung dieser Keramiken.

Während bei Glas, Einkristall oder Kunststoff eine Vielzahl von Farben existiert, fehlt bei technischer Keramik bisher eine ähnlich umfangreiche Farbauswahl. In der Regel sind technische Keramiken aus zum Beispiel Zirkoniumoxid (ZrO₂), Aluminiumoxid (Al₂O₃), Titanoxid (TiO₂), Yttriumoxid (Y₂O₃), Magnesiumaluminat (MgAl₂O₄) von Natur aus weiß beziehungsweise beige oder pastellfarben. Insbesondere fehlt es an intensiven Farben und einem System, mit dem Mischfarben erzeugt werden können.

Eine Möglichkeit, Färbungen durch Dotierungen in Kristallsystemen zu erzeugen, ist prinzipiell bekannt von farbigen natürlichen oder künstlich hergestellten Einkristallen, wie zum Beispiel bei Dotierungen mit Cr³⁺ im Rubin, jedoch konnte diese Farbauswahl bisher nicht umfassend auf die polykristalline Keramik übertragen werden.

Weiterhin ist eine Vielzahl farbiger anorganischer Pigmente bekannt. Eine Farbgebung kann bei Keramiken durch Auftrag farbiger pigmenthaltiger Glasuren realisiert werden, jedoch ist eine Glasur deutlich weicher als technische Keramik und damit anfälliger für Kratzer sowie wegen des Glasanteils weniger thermisch beständig. Farbige Glasuren werden zum Beispiel in der Dentalkeramik eingesetzt.

Aus der EP 3 245 259 B1**,** der EP 3 045 505 A1 und der EP 3 601 440 A1 sind Kompositkeramiken bekannt, die durch Zugabe farbiger Pigmente und Verdichtung unter Druck erzeugt werden.

In der WO 2011/120181 A1 werden opake farbige Keramiken beschrieben, die mindestens ein Pigment enthalten. Die US 9 434 654 B2 beschreibt entsprechend eine Methode zur Herstellung zweifarbiger Keramiken. In der EP 2 239 246 B1 wird ein Verfahren zum Einfärben von Dentalkeramik auf Zirkonoxidbasis mittels Metallionen-Lösungen beschrieben.

Wegen seiner großen Härte, Festigkeit und Temperaturbeständigkeit ist Korund (Al₂O₃) der am häufigsten eingesetzte Werkstoff für technische Keramiken. In der EP 1 706 365 B1 sind durchsichtige Korundkeramiken unterschiedlicher Färbung angegeben. Transparente farbige Keramiken gemäß der EP 1 706 365 B1 haben den Nachteil, dass ein Bauteil mit unterschiedlichen Wandstärken unterschiedliche Farbintensitäten aufweist. Ein einheitlicher Farbton ist daher mit diesem Material nur für Gebilde gleicher Wandstärke realisierbar. Weiterhin ist nachteilig, dass die dort beschriebene Farbgebung der Keramik durch einen aufwändigen und kostenintensiven heißisostatischen Pressvorgang bei hohem Druck und hoher Temperatur unter Schutzgas realisiert wird. Dieser heißisostatische Pressvorgang dient dazu, verbleibende Poren zu beseitigen, wodurch die Transparenz bei gleichzeitig geringer Korngröße erreicht wird. Nach der EP 1 706 365 B1 werden zwar alle Grundfarben angegeben, jedoch fehlt aufgrund der Transparenz der Weißanteil, der für die Realisierung vieler Farbtöne notwendig ist. Ein weiterer Nachteil besteht darin, dass die beschriebenen Materialien durch Temperung zum Beispiel bei 1100 °C die Farbe verändern. Daher ist das Material für den "Lost-Wax-Casting"-Prozess nur eingeschränkt verwendbar.

Die Beimischung farbiger Pigmente erfordert relativ hohe Anteile an Farbpigmenten. Die Pigmente haben unterschiedliche Korngrößen gegenüber den keramischen Ausgangsstoffen, sind schwierig gleichmäßig homogen zu verteilen und können während des Sintervorganges unerwünschte Reaktionen hervorrufen. Eine Mischung mehrerer Pigmente zur Realisierung von Mischfarben ist daher problematisch.

Die in der EP 2 239 246 B1 beschriebene Lösung beinhaltet gefärbte transluzente Keramiken. Es ist bekannt, dass technische Keramiken in gewissem Maße transluzent sein können, insbesondere bei geringen Wandstärken. Die in der EP 2 239 246 B1 angegebene Keramik aus Zirkoniumoxid (ZrO₂) vom Typ TZ3YE ist entsprechend nur sehr gering transluzent und wird daher als Dentalkeramik überwiegend im Backenzahnbereich eingesetzt. Aus dieser Druckschrift gehen keine Maßnahmen hervor, die geeignet sein können, die Transluzenz des keramischen Materials gegenüber dem bekannten Stand der Technik zu verändern, vielmehr wird die Transluzenz im Vergleich zur Anwendung von in der Dentaltechnik üblichen transluzenzmindernden Beschichtungen abgeleitet.

Der Erfindung lag die Aufgabe zugrunde, erstmals ein Set technischer Keramiken zu ermöglichen, mit dem alle Grundfarben, das heißt blau, grün, rot, gelb, purpur, blaugrün sowie Mischungen wie zum Beispiel braun, orange, violett und olivgrün in intensiven und in abgestuft helleren Farbtönen sowie Schwarz- und Grautönen unterschiedlicher Helligkeit realisierbar sind.

Dabei sollen die beschriebenen Nachteile des Standes der Technik überwunden werden, insbesondere soll die gefärbte Keramik ohne Anwendung von Druck zur Herstellung der Rohlinge und beim Sintern, zum Beispiel beim heißisostatischen Pressen oder Spark-Plasma-Sintering, herstellbar sein, vorzugsweise bis mindestens 1100 °C farbstabil bleiben, eine große Härte und Festigkeit sowie an der Außenwand einen homogenen Farbton unabhängig von der Dicke der Keramik aufweisen. Weiterhin soll das zu entwickelnde Herstellungsverfahren geeignet sein, geformte farbige Keramiken herzustellen, um eine kostenintensive Bearbeitung der harten gesinterten Keramiken zu vermeiden.

Die Aufgabe wird durch eine gefärbte technische Korund-Keramik gemäß den Merkmalen von Anspruch 1 gelöst. Vorteilhafte Weiterbildungen sind in den abhängigen Ansprüchen angegeben.

Die erfindungsgemäße gefärbte technische Korund-Keramik mit einer durch farbgebende, Licht absorbierende Dotierungen gebildeten Farbkomponente der Farbe, die sich zumindest in einer Oberflächenschicht der Korund-Keramik befindet, und einer unterhalb der Farbkomponente, das heißt in einem Hintergrund der Farbkomponente liegenden Weißkomponente der Farbe, weist eine Dichte von 99,3 bis 99,9 %, bezogen auf die Dichte einer porenfreien Keramik der entsprechenden Zusammensetzung als 100 % auf. Unter Dichte ist in diesem Zusammenhang eine über das Gesamtvolumen gemittelte Dichte der Keramik zu verstehen. Der Wert der Dichte der porenfreien Keramik weicht aufgrund der geringen Zusätze in der Regel nicht sehr stark von der Dichte einer entsprechenden porenfreien ungefärbten Korund-Keramik, die 3,987 g/cm³ beträgt, ab. Die Dichte der porenfreien Keramik beziehungsweise der dotierten porenfreien Keramik kann, soweit keine Tabellendaten vorliegen, experimentell aus Einkristallen gleicher Zusammensetzung oder durch Drucksinterung vollständig verdichteter Keramik ermittelt werden beziehungsweise aus den Atommassen berechnet werden. Die erfindungsgemäße gefärbte technische Korund-Keramik enthält 0,001 bis 0,5 Massen-% der farbgebenden, Licht absorbierenden Dotierungen sowie 0,1 bis 0,7 Vol-% Streuzentren, die aus Poren und/oder Partikeln gebildet sind, wobei der Brechungsindex der Streuzentren vom Brechungsindex der die Streuzentren umgebenden Bereiche der Korund-Keramik abweicht, und wobei die Streuzentren die Weißkomponente der Farbe bereitstellen. Diese Weißkomponente kann durch Streuzentren aus Poren oder Partikeln der Größe 10 nm bis 200 nm, vorzugsweise 20 nm bis 100 nm, erzeugt werden. Gemäß einer Ausführungsform der Erfindung wird zumindest ein Teil der Streuzentren durch nicht absorbierende Fremdpartikel, wie zum Beispiel aus ZrO₂, TiO₂, Y₂O₃ und La₂O₃, gebildet.

Aufgrund ihrer Dichte, die nicht über 99,9 % hinausgeht, ist die technische Korundkeramik nicht transparent ausgebildet. Im Zustand einer ungefärbten technischen Keramik mit dieser Dichte würde eine solche technische Korundkeramik eine Opazität von 60 % bis 90 %, gemessen nach ISO 2471 bei einer Dicke von 2,5 mm im Wellenlängenbereich von 360 bis 740 nm, aufweisen. Das bedeutet, dass die Keramiken zum Beispiel bei einer Dicke von 0.8 mm undurchsichtig sind, aber eine Transluzenz aufweisen, die sich positiv auf die Farbintensität auswirkt. Überraschenderweise zeigte sich, insbesondere bei längerer Sinterdauer an Luft, dass die Oberfläche der Keramik etwas besser verdichtet als das Volumen, erkennbar an einer höheren Transluzenz im Randbereich von zirka 0,5 mm Dicke. Dieser Effekt kann durch weitere Verlängerung der Sinterdauer verstärkt werden. Bei farbig dotierter Keramik bildet sich durch die Transluzenz eine intensive Farbschicht an der Oberfläche. Dies ist zum Beispiel im Querschnitt erkennbar.

Neben der Weißkomponente kann die Korund-Keramik noch eine zusätzliche, durch Gitterdefekte im Korund-Gitter, sogenannte F-Zentren, gebildete Gelbkomponente umfassen. Diese Gelbkomponente lässt sich vorteilhafterweise durch Magnesiumionen im Korund-Gitter erzeugen. Der entsprechenden Anteile der Magnesiumkomponente an der Korund-Keramik liegen vorzugsweise im Bereich von 0,0001 bis 0,2 Massen-%, besonders bevorzugt im Bereich von 0,001 bis 0,1 Massen-% Magnesium, beispielsweise 0,0018 Massen-%.

Gemäß einer besonders vorteilhaften Ausführungsform der Erfindung ist die Weißkomponente und/oder die Gelbkomponente gleichmäßig homogen in der keramischen Struktur verteilt, während sich die durch die farbgebenden, Licht absorbierenden Dotierungen gebildete Farbschicht an der Oberfläche befindet. Vorzugsweise sind als farbgebende Ionen im Wesentlichen Kobalt-Ionen oder Nickel-Ionen oder Chrom-Ionen oder Mischungen von mindestens zwei dieser Ionenarten in der gefärbten Korundkeramik enthalten. Die farbgebenden Ionen oder deren Mischungen können durch weitere Metall-Ionen, jeweils ausgewählt aus der Gruppe von Magnesium-, Mangan-, Eisen-, Vanadium-, Praseodym-, Neodym-, Europium-, Erbium-, Thulium-, Ytterbium-, Dysprosium-, Holmium-Ionen, ergänzt sein. Die Massenanteile der farbgebenden Ionen oder Mischungen liegen bei jeder der oben genannten Varianten im Bereich von 0,001 bis 0,5 Massen-%, vorzugsweise im Bereich von 0,01 bis 0,2 Massen-%, und damit im Bereich der aus natürlichen oder künstlichen Einkristallen bekannten Dotierungen.

Ein weiterer Teil der Aufgabe der Erfindung besteht in einem Verfahren, durch das sich die erfindungsgemäße gefärbte technische Korund-Keramik herstellen lässt. Dieser Teil der Aufgabe wird durch ein Verfahren nach Anspruch 8 gelöst.

Ein solches Verfahren zur Herstellung gefärbter technischer Korund-Keramik mit den oben genannten Merkmalen umfasst zumindest die Schritte:
I. Herstellung einer Suspension, enthaltend Korundpulver einer mittleren Korngröße von 0,05 bis 0,5 µm und Reinheit von > 99,9 %,
II. Dispergierung des Korundpulvers, vorzugsweise durch Mahlung der Suspension mit Mahlkugeln,
III. eine Filtration der Suspension und Entgasung der Suspension mit Unterdruck,
IV. Gießen der Suspension in eine Gießform mit einer Kavität,
V. Entformung eines in der Gießform gebildeten Rohlings,
VI. Trocknung des Rohlings,
VII. Vorbrand bei 400 °C bis 1000 °C und
VIII. Sinterbrand bei 1150 bis 1600 °C, vorzugsweise 1300 °C bis 1450 °C, mit einer bevorzugten Haltezeit bei Sintertemperatur von 2 h bis 20 h, vorzugsweise 10 h, und besonders bevorzugt im Zwei-Stufen-Sinterverfahren mit einer der Haltezeit vorgelagerten kurzen Haltezeit von 1 bis 30 min bei einer im Vergleich zur Sintertemperatur der Haltezeit um 30 K bis 100 K erhöhten Temperatur,
wobei die farbgebenden, Licht absorbierenden Dotierungen a) durch Zugabe von Oxiden oder Salzen zur Suspension in Schritt I. und/oder b) durch Infiltration mit wässrigen Lösungen farbgebender Ionen unmittelbar nach der Entformung in Schritt V. und/oder c) durch Infiltration der vorgebrannten Keramik mit wässrigen Lösungen farbgebenden Ionen in die Keramik eingebracht werden.

Mit dieser Verfahrensweise, insbesondere aufgrund der Abfolge der Schritte VII und VIII und der dabei jeweils gewählten Temperaturen, werden Dichten bis 99,9 % überraschenderweise bereits durch drucklose Sinterung, das heißt durch Sinterung bei Normaldruck, erreicht. Dadurch entfällt die Notwendigkeit einer heißisostatischen Nachverdichtung (HIP), die unter Schutzgas und Druck erfolgen müsste. Vorzugsweise soll für das erfindungsgemäße Verfahren eine heißisostatische Nachverdichtung sogar explizit ausgeschlossen werden.

Gemäß einer besonders vorteilhaften Ausführungsform des Verfahrens wird in Schritt I. ein Korundpulver mit einer mittleren Korngröße von 0,1 bis 0,25 µm eingesetzt. Die in Schritt I. hergestellte Suspension kann darüber hinaus noch Stabilisatoren und Hilfsmittel, vorzugsweise zur Regelung des pH-Wertes, der Oberflächenspannung, der UV-Absorption und/oder der Stabilisierung dispergierter Partikel, enthalten. Des Weiteren kann die Suspension lichtstreuende Zusätze, vorzugsweise mit einem Anteil 0,2 Volumen-% an der Suspension, sowie 0 bis 0,2 Massen-% Magnesium in Ionenform oder als magnesiumhaltige Verbindung, beinhalten. Vorzugsweise werden nicht mehr als 0,1 Massen-% Magnesium verwendet. Gemäß einer Ausführungsform werden der Suspension 0,03 % MgO, bezogen auf die Suspension, zugesetzt, was einem Anteil vom 0,0018 % Magnesium entspricht. Diese Zusätze dienen der Ausbildung von Streuzentren beziehungsweise Farbzentren während des Sinterbrandes in Schritt VIII.

Bevorzugt kommt innerhalb des oben beschriebenen Verfahrens ein Gelcasting-Verfahren zur Anwendung, bei der der Suspension vorzugsweise nach der Dispergierung beziehungsweise Mahlung in Schritt II. Monomere als organische Gelbildner zugesetzt werden.

Die Mahlung dient der Aufspaltung von Agglomeraten zur homogenen Dispergierung der Ausgangsstoffe. Die Dispergierung der Ausgangsstoffe in der Suspension kann durch geeignete bekannte Dispergierverfahren, wie zum Beispiel Ultraschall unterstützt werden. Prinzipiell können sich die Monomere auch während des Mahlvorganges bereits in der Suspension befinden, jedoch besteht dabei das Risiko einer vorzeitigen Polymerisation.

Die Filtration der Suspension in Schritt III wird zur Abtrennung von Fremdpartikel, Verunreinigungen oder Pulveragglomeraten, die zum Beispiel durch Antrocknung von Suspension an der Gefäßwand entstehen können, durchgeführt. Die Entgasung durch Unterdruck entfernt in der Suspension gelöste Luft. Das Gießen der Suspension in Schritt IV erfolgt in eine Gießform, welche vorzugsweise durch 3-D-Druck hergestellt wurde.

Nach einer Variante des Verfahrens, bei dem das Gelcasting zur Anwendung kommt, erfolgt die Infiltration durch Lösungen farbgebender Ionen in Wasser, nachdem der Gelkörper in Schritt V. aus der Gießform entnommen wurde.

Alternativ kann die Infiltration auch nach dem Vorbrand in Schritt VII. durch Lösungen farbgebender Ionen in einem Lösungsmittel, welches weiterhin Mittel zur Einstellung der Viskosität und zur Stabilisierung der Lösung enthält, erfolgen, nachdem die organischen Gelbildner bei 400 bis 1000 °C entfernt wurden.

Nach einer Ausgestaltung der Erfindung werden die Lösungen farbgebender Ionen aus einem Satz verschiedener Keramik-Färbelösungen entnommen, wobei als farbgebende Ionen in den Keramik-Färbelösungen Kobalt-Ionen oder Nickel-lonen oder Chrom-Ionen oder Mischungen dieser Ionen enthalten sind. Vorteilhafterweise enthalten die Keramik-Färbelösungen polymere Zusätze für die Einstellung der Viskosität, zum Beispiel Polyethylenglykol, Komplexbildner, Stabilisatoren, zum Beispiel gegen Schimmelbildung, und Chemikalien zur Regelung des pH-Wertes. Nach einer besonders vorteilhaften Ausführungsform des Satzes von verschiedenen Keramik-Färbelösungen umfasst dieser
- Keramik- Färbelösungen für alle Grundfarben, das heißt blau, grün, rot, gelb, purpur, blaugrün,
- Mischungen, zum Beispiel braun, orange, violett und olivgrün in intensiven und in abgestuft helleren Farbtönen, sowie
- Schwarz- und Grautöne unterschiedlicher Helligkeit.

Gemäß einer Ausgestaltung der Erfindung werden die farbgebenden Ionen durch ein anderes lösliches Salz von einem Metall-Ionen oder mehrere andere lösliche Salze von Metall-Ionen, jeweils ausgewählt aus der Gruppe von Magnesium-, Mangan-, Eisen-, Vanadium-, Praseodym-, Neodym-, Europium -, Erbium-, Thulium-, Ytterbium-, Dysprosium-, Holmium-Ionen, ergänzt, um spezielle Absorptionen oder Effekte hervorzurufen. Die Konzentrationen der gelösten Salze in den Färbelösungen liegen vorzugsweise jeweils im Bereich von 0,0001 mol/l bis 1 mol/l für eine färbende Komponente.

Die Farbe von Materialien und Gegenständen ist ein wichtiges Merkmal und häufig ein entscheidendes Kaufkriterium. Die Erfindung ermöglicht erstmals die Realisierung einer vollständigen Farbauswahl für technische Keramik aus Korund durch ein vergleichsweise einfaches Verfahren. Die angenehme Haptik und hervorragende Kratzfestigkeit machen die erhaltene farbige Korundkeramik besonders interessant für Designapplikationen wie zum Beispiel Schmuck, Uhren oder Gehäusen von elektronischen Geräten. Im Vergleich zu Einkristall, wie zum Beispiel Saphir oder Rubin, ist eine kostengünstigere Herstellung bei Temperaturen deutlich unterhalb des Schmelzpunktes möglich. Weiterhin ist durch den Weiß- beziehungsweise Gelbanteil der erfindungsgemäßen Keramik eine größere Farbvielfalt im Vergleich zu Einkristall möglich. Durch die Formgebung im keramischen Herstellungsprozess beziehungsweise durch die Möglichkeit zur Bearbeitung der ungebrannten keramischen Rohlinge kann die aufwändige Hartbearbeitung entfallen oder mit deutlich geringerem Aufwand durchgeführt werden.

Die erfindungsgemäße Lösung stellt eine bisher unerreichte Auswahl gefärbter technischer Keramiken hoher Härte und Festigkeit bereit, bei denen der Weißanteil und der Gelbanteil gezielt variiert und eingestellt werden kann, sowie einen Satz (Set) aus Liquids zur Auftragung der Färbung vor dem Sintern der Keramik. Die Sinterung kann an Luft ohne Druck oder Schutzgas erfolgen, wodurch die Farben bei nachträglichem Aufheizen bei 1100 °C stabil bleiben. Der Herstellungsprozess ermöglicht die Realisierung komplexer Formen aus farbiger Keramik, wobei die Keramik an der Oberfläche gefärbt oder weitergehend durchgefärbt sein kann. Auch für technische Bauteile aus Keramik, wie zum Beispiel Fadenführer, Schrauben oder Medizinprodukte können farbliche Markierungen zur Kennzeichnung oder Unterscheidung vorteilhaft sein. Gegenüber Glas beziehungsweise Glaskeramik weist die neue farbige Keramik höhere Härte und Festigkeiten auf.

In der bereits erwähnten EP 2 239 246 B1 ist beschrieben, dass Dentalkeramiken mittels Färbelösungen durchgehend gefärbt werden können, wobei die Farbe und die Dicke der Infiltration nicht von der Infiltrationsdauer abhängen. Im Gegensatz dazu wurde gefunden, dass bei den verwendeten Korundkeramiken nur eine Oberflächenschicht von zirka 1 bis 2 mm Dicke durch Infiltration der Keramik mit gelösten Metallsalzen gefärbt wird, weitgehend unabhängig von der Infiltrationsdauer. Dieser Effekt wirkt teilweise zusätzlich zum bereits beschriebenen Effekt der erhöhten Verdichtung beziehungsweise Transluzenz im Randbereich, der durch die erfindungsgemäße Kombination aus Rohstoff, Verarbeitungsverfahren und Sinterregime erhalten wird.

Überraschenderweise wurde im Rahmen der vorliegenden Erfindung entdeckt, dass bei Färbung einer Oberflächenschicht der Korund-Keramik der durch die Streuzentren bewirkte weiße Hintergrund wesentlich zur Verbesserung der Leuchtkraft der Farbe beiträgt und dass auch ein hellgelber Hintergrund eine attraktive Verschiebung der Farben nach Gelb bewirkt. Der Hintergrund trägt positiv zur Farbwirkung bei, wenn die Keramik etwas transluzent ist. Bei opaker Keramik wurde dieser Effekt nicht beobachtet. Mit dem Begriff Hintergrund ist ausdrücklich nicht die Unterlage gemeint, auf der die Keramik liegt, sondern ein schichtweiser Aufbau der Keramik.

Weiterhin wurde entdeckt, dass sich durch Mischung von Färbelösungen, die geeignet sind zur Infiltration der vorgebrannten porösen Keramik aus den Farben Blau, Gelb und Rot mittels Mischung der Färbelösungen und gegebenenfalls Verdünnung vielfältige Abstufungen wie zum Beispiel Orange, Violett, Braun, Gelbgrün, Flaschengrün oder Olivgrün realisieren lassen, sowie auch Grautöne und Schwarz. Dabei kann die Farbe Blau durch wasserlösliche Kobalt-Salze, die Farbe Gelb durch wasserlösliche Nickelsalze und die Farbe Rot durch wasserlösliche Chromsalze realisiert werden. Mit einem einfachen Satz aus drei Färbelösungen und Verdünner können die unterschiedlichen Lösungen hergestellt werden, in welche die porösen Weißkörper getaucht werden. Ebenso ist es möglich, die Färbelösungen auf die Weißkörper durch Pinsel oder Tupfer aufzutragen. Die für die Grundfarben angegebenen Ionen können durch andere lösliche Salze von Metall-Ionen wie Mg, Mn, Fe, V, Pr, Nd, Eu, Er, Tm, Yb, Dy, Ho ergänzt werden, um spezielle Absorptionen oder Effekte hervorzurufen. Die Viskosität der Färbelösungen wird durch Zugabe üblicher Polymere, zum Beispiel Polyethylenglykol, eingestellt, ebenso können Komplexbildner, Stabilisatoren zum Beispiel gegen Schimmelbildung und Chemikalien zur Regelung des pH-Wertes zugegeben werden. Die gute Wirksamkeit der Färbelösungen ist an die Eigenschaften der Keramik gebunden.

Beim Verfahren nach der EP 1 706 365 B1 wurde die Korund-Keramik bis zu einer Temperatur gesintert, bei der eine Dichte von 95 bis 97 % erreicht wurde, und danach heißisostatisch unter Argon und Druck auf praktisch 100 % verdichtet. Überraschenderweise wurde im Rahmen der Erfindung gefunden, dass bei Sinterung an Luft bereits bei einer Dichte von zirka > 99,3 % plötzlich eine deutliche Veränderung der gefärbten opaken Keramiken von hellen Farben hin zu intensiveren Farben existiert. Dieser Übergang ist verbunden mit der Verringerung der Opazität der Keramik, ohne dass die Keramik dabei transparent wird. Es wird vermutet, dass die Ursache in der positiven Wirkung der Lichtstreuung begründet ist, die einen Einfluss auf die Farbwirkung der Keramiken hat. Streueinflüsse an der Oberfläche können durch Politur weitgehend eliminiert werden. Bei homogenen Einkristallen aus Saphir oder kubischem Zirkoniumoxid tritt dann im Material praktisch keine Lichtstreuung auf. Bei porenfreier transparenter Keramik wird hingegen Lichtstreuung durch die Doppelbrechung jedes einzelnen Kristallits verursacht. Daher wirkt transparente Korund-Keramik im Gegensatz zum Saphir immer etwas trübe. Noch stärker ist dieser Effekt beim tetragonalen ZrO₂ ausgeprägt, dessen Doppelbrechung höher ist als beim Korund. Intensive leuchtende Farben konnten daher mit tetragonalem ZrO₂ ohne Zugabe farbiger Pigmente selbst bei hohen Dotierungskonzentrationen nicht erreicht werden. Üblicherweise wird eine bestimmte Phasenzusammensetzung des ZrO₂, die zum Beispiel monoklin, tetragonal oder kubisch sein kann, eingestellt, beispielsweise durch Beimischung von Y₂O₃, jedoch wurden auch bei hochtransluzenter ZrO₂-Keramik mit kubischem Anteil, wie zum Beispiel Zpex^{™} der Firma Tosoh, nur relativ helle Färbungen, speziell im roten Farbbereich, erzielt. Beim Korund ist der Anteil der Doppelbrechung geringer und daher sind in der Keramik intensivere Farben als beim ZrO₂ möglich, weiterhin sind aufgrund des anderen Kristallsystems durch Dotierungen andere Absorptionen verursacht. Die Festigkeit von Korundkeramik von zirka 600 MPa im 4-Punkt-Biegeversuch ist auf ähnlichem Niveau wie die neuen transluzenten Dentalkeramiken aus ZrO₂, allerdings ist der Härtewert der Korundkeramik mit HV10, einem Prüfverfahren mit Prüfkraft F von 10 Kilopond = 98,07 N, zirka 2000 und damit deutlich höher als bei ZrO₂ mit HV10 zirka 1250. Dies ist besonders vorteilhaft für die Kratzfestigkeit, erfordert jedoch auch einen erhöhten Aufwand bei der Bearbeitung der gesinterten Keramiken. Charakteristisch für den Sintervorgang ist das Kornwachstum mit zunehmender Temperatur. Es ist bekannt, dass Härte und Festigkeit für Sinterkeramik gleicher Reinheit und Dichte mit abnehmender Gefügekorngröße zunehmen. Daher ist es vorteilhaft, wenn, wie in den erfindungsgemäßen Beispielen, bereits bei niedrigen Sintertemperaturen eine extrem hohe Dichte der Keramik erreicht werden kann.

Gefärbte Keramiken können durch Dotierungen mit Metall-Ionen erzeugt werden. Die durch die Dotierung eingebrachten Fremdatome verursachen spezifische Absorptionen, die als Färbung wahrgenommen werden. Bei transparenter Keramik oder transparenten Einkristallen gilt im Wesentlichen das Lambert-Beer'sche Gesetz, wodurch die Farbwirkung von der Materialdicke bestimmt wird. Die erfindungsgemäße Lösung überwindet diesen Nachteil, indem in der Keramik gezielt Streuzentren beziehungsweise Defekte erzeugt werden, wodurch der für die Farbwirkung neben der Absorption wichtige Weißanteil realisiert wird. Die Streuzentren müssen einen von Korund unterschiedlichen Brechungsindex, einen hinsichtlich der Lichtstreuung geeigneten Durchmesser in der Größenordnung der Wellenlänge des Lichts und eine homogene Verteilung in der Keramik haben. Als Streuzentren kommen Poren und/oder nicht lichtabsorbierende Fremdpartikel infrage wie zum Beispiel ZrO₂, TiO₂, Y₂O₃ und La₂O₃. Es wurde beobachtet, dass bei Porenanteilen > 0,7 % die mit farbgebenden Dotierungen versehene Keramik stets pastellfarben und opak durch den hohen Anteil an Lichtstreuung ist, während im Übergangsbereich von 0,7 bis 0,1 % Porenanteil ein Sprung zu deutlich intensiveren Farben auftritt. Dabei wird die Keramik etwas transluzent, das heißt lichtdurchlässig und glänzend. Mit < 0,1 % Poren beginnt die Keramik transparent zu werden, so dass der Betrachter durch die polierte Keramik hindurchschauen kann. Aufgrund des geringeren Brechzahlunterschiedes können die Anteile lichtstreuender Partikel prinzipiell höher sein als die Porenanteile. Allerdings ist zu beachten, dass die Streuung aus Poren und Partikeln additiv wirkt.

Die Realisierung unterschiedlicher Färbungen kann somit durch die Art und Konzentration der absorbierenden Dotierung und den Weißanteil erfolgen, der über die Menge und Größe der Streuzentren eingestellt wird. Für einige Farben ist noch eine zusätzliche Gelbkomponente günstig. Die zusätzliche Gelbkomponente wird vorzugsweise durch Gitterdefekte realisiert, so genannte F-Zentren im Korundgitter, die zum Beispiel durch Mg²⁺ erzeugt werden können. Vorteilhaft ist es weiterhin, wenn nur eine Oberflächenschicht eingefärbt wird, da die Farbe durch den hellen Hintergrund eine höhere Leuchtkraft erhält. Besonders attraktive Farben können durch einen hellen gelbfarbenen Hintergrund erzeugt werden.

Somit kann eine bisher unerreichte Anzahl intensiver und hellerer Farben mit einer technischen Keramik erzeugt werden. Voraussetzung für eine gleichmäßige Färbung ist eine sehr homogene Struktur der Keramik. Anreicherungen von Dotierungen wären als farbige Flecken sichtbar, während Aggregate von Streuzentren als weiße Flecken erscheinen. Vermutlich spielt die Porengröße der Keramik eine wichtige Rolle bei der Infiltration.

Für übliche technische Keramiken aus Korund werden, je nach Reinheit der Rohstoffe, Dichten von 3,7 bis 3,9 g/cm³, das heißt 92,8 % bis 97,8 % der maximalen Dichte angegeben. Dichten von > 99,5 % sind hingegen durch Sinterung an Luft nur schwer zu erreichen. Die Ursache liegt in der Regel bereits in der ungleichmäßigen Struktur der ungesinterten Grundkörper, die beim Sintern nicht vollständig verdichtet werden kann. Um den Dichtebereich von 99,3 % bis 99,9 % zu erreichen, sind spezielle Rohstoffe und Herstellungsverfahren erforderlich. Natürlich kann die absolute maximale Dichte dotierter Keramik auf Grund der unterschiedlichen Masse der chemischen Elemente von der absoluten maximalen Dichte reiner undotierter Korundkeramik etwas abweichen, dies ändert jedoch nichts an der prozentualen Dichte.

Gegenüber dem herkömmlichen Verpressen von keramischem Pulver oder Granulaten haben flüssige Formgebungsverfahren wie Schlickerguss oder Gelcasting ein höheres Potenzial zur Realisierung homogener Grünkörper und damit hochdicht sinterbarer Keramiken, wie bereits aus der Druckschrift Krell und Klimke, Effects of Homogenity of Particle Coordination on Solid-State Sintering of Transparent Alumina, J. AmCeram Soc.; 89 (6): 1985 bis 1992**,** bekannt.

Zur Herstellung der erfindungsgemäßen technischen Keramik ist auch Schlickerguss geeignet, hat jedoch den Nachteil der Kontaminierung der Keramikoberfläche durch die Gipsform und der begrenzten Haltbarkeit beziehungsweise Veränderung bei mehrfacher Verwendung der Gießformen. In die Reihe der Verfahren, die zur Herstellung erfindungsgemäßen technischen Keramik geeignet sind, ist Schlickerguss mit eingeschlossen, wobei jedoch die Anwendung von Gelcasting bevorzugt ist, weil für Gelcasting haltbarere und besser konstruierbare Gießformen verwendet werden können.

Speziell ist es möglich, komplexe Gießformen mittels 3D-Druck herzustellen, um damit komplexe keramische Bauteile herzustellen. Das Gelcasting-Verfahren ist unter anderem beschrieben in der Druckschrift A.C. Young, O.O. Omatete, M.A. Janney and P.A. Menchhofer, "Gelcasting of Alumina", J. Am. Ceram. Soc., 74 [3] 612 -18 (1991) sowie in der US 4 894194 A1**,** der US 5 028 362 A1 und der US 5 145 908 A1**.**

Bei dem erfindungsgemäßen Herstellungsverfahren wird vorzugsweise mit einem 3D-Drucker eine Gießform zum Einsatz im keramischen Gelcasting-Prozess gedruckt, in der die herzustellende Keramik mit Aufmaß für die spätere Schwindung beim Brennen als Kavität abgebildet ist und mindestens ein Einlauf- und Auslaufkanal bis zur Kavität geführt wird. Zum besseren Entformen kann die Gießform aus mehreren Teilen bestehen, die ineinander gesteckt und mit Dichtungen abgedichtet werden können, so dass aus der Kavität keine Flüssigkeit auslaufen kann. Eine Gießform kann mehrere Kavitäten erhalten, die entweder miteinander verbunden sein können oder über separate Einlauf- und Auslasskanäle verfügen. Die Auslasskanäle dienen dem Entweichen der Luft beim Befüllen der Gießform. Als Material für die Gießform ist Kunststoff oder Metall geeignet. Bei Kunststoff sollte die Sauerstoffpermeabilität gering sein. Die Kavität der Gießform kann mit einem Fett, Öl oder Trennmittelspray (Moldrelease Spray) behandelt werden, um Anhaftungen zu vermeiden. Vorzugsweise bestehen die Gießformen aus UV-härtbaren Photopolymeren, die zum Beispiel für SLA oder DLP-3D-Druck verwendet werden.

Die Gießform wird mit der Gelcasting-Suspension befüllt und im Vakuum entgast. Diese Suspension aus deionisiertem Wasser und elektrosterisch oder elektrostatisch stabilisierten Korundpulverpartikeln der mittleren Größe von zirka 0,1 bis 0,25 µm und optional lichtstreuenden Fremdpartikeln wird mit Mahlkugeln gemahlen. Zur Suspension werden Monomere, Initiator und gegebenenfalls Katalysator und Sensibilisator gelöst und im Vakuum entgast. Die Festigkeit und Elastizität der durch die Polymerisation gebildeten Formkörper kann durch den Monomergehalt und den Feststoffgehalt eingestellt werden. Die befüllte Gießform wird luftdicht verschlossen, während die Polymerisation abläuft. Danach wird die Gießform geöffnet und der oder die Gelkörper entnommen. Optional kann der Gelkörper in eine Färbelösung aus löslichen Metallionen getaucht werden. Durch die höhere Konzentration der Ionen in der Färbelösung erfolgt ein Austausch mit dem im Gelkörper gebundenen Wasser, so dass die Metallionen bis ins Innere des Gelkörpers gelangen können. Diese Methode ist geeignet, um größere Wandstärken zu färben.

Die Gelkörper werden danach getrocknet, bis kein Wasser mehr entweicht, und können danach optional bearbeitet werden, zum Beispiel durch Schleifen, Bohren, Fräsen und Polieren oder optional nach dem Ausbrennen bearbeitet werden, zum Beispiel durch Schleifen, Bohren, Fräsen und Polieren. Das Ausbrennen dient dem Entfernen der Binderanteile mit 0,1 bis 2 K/min in einem Temperaturbereich von 500 °C bis 900 °C.

Der keramische Rohling wird dann optional für einen Zeitraum von 1 bis 30 min in eine Färbelösung getaucht oder mit der Färbelösung bemalt oder bedruckt. Die Färbelösung enthält gelöste Metallionen, zum Beispiel lösliche Nitrate, Chloride, Acetate, Carbonate oder komplexe Salze, Bindemittel, Komplexbildner und gegebenenfalls Stabilisatoren, zum Beispiel zur Vermeidung von Schimmel. Als Bindemittel können zum Beispiel Polyethylenglykole eingesetzt werden, wobei die Viskostät durch die Kettenlänge und den Gehalt eingestellt werden kann. Erfindungsgemäß kann der pH-Wert mit Triammoniumcitrat eingestellt werden.

Diese Färbemethode ist geeignet, eine Oberflächenschicht der Keramik zu färben. Die infiltrierte Keramik wird anschließend getrocknet und an Luft bei einer Temperatur gesintert, bei der der angestrebte geringe Gehalt an Streuzentren erreicht wird. Je nach Wandstärke der Keramik können zur Erzielung einer gleichmäßigen Dichte Haltezeiten von 5 Stunden oder mehr als 10 Stunden vorteilhaft sein, ebenso vorteilhaft ist die Anwendung eines Zwei-Stufen-Sinterverfahrens mit einem kurzzeitigen Aufheizen für zirka 5 min auf eine Temperatur, die zirka 50 K über der eigentlichen Sintertemperatur liegt. Nach dem Abkühlen kann die Keramik optional bearbeitet werden, zum Beispiel durch Schleifen, Bohren, Fräsen und Polieren.

Für das Einbringen der farbgebenden Dotierungen sind drei Varianten möglich, a) durch Zugabe von Oxiden oder Salzen zum keramischen Schlicker und Aufmahlung mit Mahlkugeln, b) durch Diffusion von gelösten Ionen in den Gelkörper beziehungsweise c) durch Infiltration der vorgebrannten Keramik mit Lösungen der Ionen. Mit der Variante a) wird eine durchgefärbte Keramik realisiert, während die Variante c) nur den Oberflächenbereich färbt. Die Variante b) kann hingegen durch den Austausch des im Gel gebundenen Wassers mit der Infiltrationslösung deutlich tiefer in die Keramik eindringen. Je nach Anwendungsfall kommen alle Varianten zum Einsatz. Die Variante a) ist vorteilhaft für eine größere Stückzahl einfarbigen durchgefärbten Materials, erfordert aber einen separaten Schlicker für jede Farbe, während mit Variante c) mit geringerem Zeitaufwand eine Vielzahl unterschiedlicher Farben realisierbar ist. Daher wurde nach Variante c) ein Satz (Set) von Flüssigkeiten entwickelt, die durch Tauchen, Pinseln oder Drucken auf die vorgebrannte Keramik aufgebracht werden und nach anschließender Trocknung und Sinterung sowohl die gesamte Oberfläche als auch punktuell färben können. Für eine gleichmäßige Färbung ist es erforderlich, dass die Flüssigkeiten nach Variante c) eine höhere Viskosität aufweisen als die Flüssigkeiten nach Variante b). Weiterhin ist Variante b) ein langsamer Prozess, der je nach Dicke des Gelkörpers mehrere Stunden dauern kann, während nach Variante c) schon nach 5 bis 10 Minuten keine weitere Veränderung beobachtet wird.

In jeder der drei Varianten entsteht die eigentliche Färbung während des Sinterbrandes. Die Verdichtung ist dabei weitgehend unabhängig von der Art und Weise der Einbringung der Dotierung, das heißt, der bereits beschriebene Effekt der erhöhten Transluzenz im Randbereich wird bei Variante a), b) und c) beobachtet. Es werden keine farbigen Pigmente zugesetzt. Aufgrund der gleichmäßigen Verteilung werden lösliche Salze für Variante a), b) und c) bevorzugt. Falls die löslichen in Variante a) die Stabilität der Suspension oder die Kinetik der Polymerisation beeinflussen, können auch nichtlösliche anorganische Verbindungen mit einer mittleren Korngröße, die kleiner ist als die mittlere Korngröße des eingesetzten Korundpulvers als Precursor verwendet werden. Der Precursor dient als Quelle für Metallionen zur Einlagerung in das Korundgitter oder Anlagerung entlang der Korngrenzen.

Weitere Einzelheiten, Merkmale und Vorteile von Ausgestaltungen der Erfindung ergeben sich aus der nachfolgenden Beschreibung von Ausführungsbeispielen und den Tabellen.

Im Folgenden werden zunächst Begriffe definiert, die im Zusammenhang mit der Erfindung häufig verwendet werden:
Eine "technische Keramik" wird aus pulverförmigen, in der Regel synthetischen anorganischen Rohmaterialien hergestellt, die durch einen Brennvorgang versintert werden. Technische Keramik wird häufig auch als Hochleistungskeramik bezeichnet, die nach DIN V ENV 12212 definiert wird als hochentwickelter, hochleistungsfähiger keramischer Werkstoff, der überwiegend nichtmetallisch und anorganisch ist und über bestimmte zweckmäßige Eigenschaften verfügt.

Das "Gelcasting" ist ein keramisches Formgebungsverfahren, bei dem das anorganische Rohmaterial in einem Lösungsmittel dispergiert wird, in dem ein organischer Gelbildner gelöst ist, der das Lösungsmittel fest in einem Gel bindet, so dass die keramischen Partikel zueinander ortsfest eingebettet bleiben. Bei Verwendung von Wasser als Lösungsmittel werden die keramischen Partikel in einem Hydrogel eingebunden. Der organische Gelbildner soll vorzugsweise aus einem oder mehreren Monomeren bestehen, die durch eine Polymerisationsreaktion vernetzt werden oder auch durch Verwendung von löslichen gelbildenden Polymeren. Ausdrücklich nicht einbezogen sind anorganische Gele, die durch eine Sol-Gel-Reaktion entstehen.

Ein "Lösungsmittel" ist eine Flüssigkeit, vorzugsweise Wasser, in der das keramische Pulver, gegebenenfalls unter Verwendung löslicher Dispergierhilfsmittel und Zusatzstoffen, dispergiert wird sowie Monomere beziehungsweise Polymere gelöst werden.

Eine "Gießform" ist ein Gefäß aus Kunststoff, Metall oder Glas mit Kavität zur Aufnahme einer Suspension, zum Beispiel einer Gelcasting-Suspension, und mindestens einer Einfüll- und Auslassöffnung.

Ein "Formkörper" ist ein Rohling definierter dreidimensionaler Geometrie mit Aufmaß für die Schwindung beim Sintern. Ein "Gelkörper" ist ein entformbarer Gelcasting-Rohling nach Gelbildung. Mit "Grünkörper" wird ein Rohling nach der Trocknung bezeichnet. Ein "Weißkörper" ist ein Rohling nach dem Ausbrennen der in der Regel organischen Bindemittel und Zusatzstoffe.

Ein "Streuzentrum" ist ein Objekt im keramischen Gefüge mit einem von der Umgebung abweichenden Brechungsindex und einem Durchmesser, der geeignet ist, bei Wechselwirkung mit Licht eine Lichtstreuung im Sinne der Mie-Theorie zu verursachen, zum Beispiel Poren oder Fremdpartikel in Korundkeramik. Doppelbrechung, das heißt die Aufspaltung des Lichtststrahl beim Durchgang durch jeden einzelnen Kristallit des keramischen Gefüges soll nicht als Streuzentrum im Sinne dieser Anmeldung angesehen werden, ebenso wenig wie die Lichtstreuung, die durch die Rauigkeit der Oberfläche hervorgerufen wird..

"Farbzentren" (F-Zentren) sind Gitterfehler wie Leerstellen oder fehlende Valenzen die sichtbares Licht absorbieren, zum Beispiel durch Substitution von Al3+ durch Mg2+ im Korundkristallgitter. Farbzentren können durch Bestrahlung mit energiereicher Strahlung hervorgerufen werden.

Die Spektralwerte wurden an gesinterten Plättchen von 13 bis 14 mm Durchmesser mit einem Spektrophotometer der Firma Konica-Minolta CM-3610A mit Glanzkomponente für die Lichtart D65/ 10° auf weißer Unterlage vom Typ LENETA Form 5DX ermittelt und sind als L*a*b* Farbwerte im sogenannten CIELAB Farbraum angegeben. Der CIELAB-Farbraum, auch als CIE L * a * b * bekannt, ist ein Farbraum, der im Jahre 1976 von der Internationalen Beleuchtungskommission (CIE) definiert wurde. Er drückt Farbe als drei Werte aus. Das Symbol L* gibt im CIELAB-Farbraum die Helligkeit an mit schwarz, was L*= 0 entspricht, und weiß, für das ein Wert von L*=100 gilt. Das Symbol a* gibt im CIELAB-Farbraum die Rot-Grünverschiebung an, wobei negative Werte für Grün und positive Werte für Rot stehen. Das Symbol b* gibt im CIELAB-Farbraum die Gelb-Blauverschiebung an, wobei negative Werte für Blau und positive Werte für Gelb stehen.

Die "Opazität" ist ein Maß für die Lichtdurchlässigkeit, wobei ein Wert von 100% bedeutet, dass das Material nicht lichtdurchlässig ist. Zur Bestimmung der Opazität wurde mit dem CM-3610A im Opazitätsmodus nach ISO 2471, jeweils zusätzlich mit der schwarzen Unterlage der Farbkarte vom Typ LENETA Form 5DX gemessen. Opazitäten von > 100 können aus der Abweichung der verwendeten Farbkarte zu den Kalibrierstandards des Spektrophotometers, Weiß und Schwarz, resultieren.

Die "mittlere Korngröße" beziehungsweise "mittlere Partikelgröße" von keramischen Rohstoffen bezieht sich auf Herstellerangaben, üblicherweise angegeben als d50-Wert, gemessen mit bekannten physikalischen Methoden der Partikelgrößenmessung wie zum Beispiel Laserbeugung.

"Gefärbt" bedeutet, dass die Keramik im sichtbaren Spektralbereich des Lichts Absorptionen aufweist, die durch das menschliche Auge als Farbe beziehungsweise grau oder schwarz wahrgenommen werden.

Die Dichte wurde mit einer Waage ABJ 320-4NM der Firma Kern & Sohn mit einem Aufsatz zur Dichtebestimmung nach Archimedes in Wasser bestimmt.

Im Folgenden sind sowohl die zumindest erforderlichen, allen Ausführungsformen des erfindungsgemäßen Verfahrens gemeinsamen Schritte als auch die optionalen und gegebenenfalls durchzuführenden Teilschritte genannt:
I) Herstellung einer Suspension aus Korundpulver einer mittleren Korngröße von 0,05 bis 0,4 µm, vorzugsweise 0,1 bis 0,2 µm, und Reinheit von > 99,9 %, Stabilisatoren und Hilfsmitteln, zum Beispiel zur Regelung des pH-Wertes, der Oberflächenspannung, der UV-Absorption und/oder der Stabilisierung dispergierter Partikel, sowie bis 0,2 Volumen-% lichtstreuenden nichtabsorbierenden Zusätzen, bezogen auf das Volumen des eingesetzten Korundes gegebenenfalls farbgebenden Zusätzen nach Variante a) sowie 0 bis 0,2 Massen-% Magnesium, bezogen auf die Masse des eingesetzten Korundes, in Ionenform oder als magnesiumhaltige Verbindung,
II) Dispergierung des Pulvers, zum Beispiel durch Mahlung der Suspension mit Mahlkugeln,
IIa) das Auflösen von 1 bis 8 Massen-%, vorzugsweise 2,5 bis 4 Massen-% Monomeren, bezogen auf die Gesamtmasse der Suspension, in der Suspension als optionalen Schritt,
IIb) gegebenenfalls die Zugabe von einem Initiator und/oder einem Katalysator für die Polymerisation der Monomere,
III) eine Filtration und Entgasung der Suspension mit Unterdruck,
IV) Gießen der Suspension in Gießform mit Kavität,
IVa) gegebenenfalls eine Polymerisation der Monomeren, die zum Beispiel eingeleitet durch Erhitzen und/oder UV-Bestrahlung,
V) Entformung eines in der Gießform gebildeten Rohlings, das heißt Entnahme des gebildeten Formkörpers beziehungsweise Gelkörpers aus der Gießform, und gegebenenfalls Farbgebung nach Variante b),
VI) Trocknung des Formkörpers beziehungsweise Gelkörpers,
Vla) gegebenenfalls eine Bearbeitung des Grünkörpers, zum Beispiel durch Fräsen, Schleifen, Polieren oder Bohren,
VII) einen Vorbrand des getrockneten Grünkörpers bei 400 bis 1000 °C,
Vlla) gegebenenfalls eine Bearbeitung des Weißkörpers, zum Beispiel durch Fräsen, Schleifen, Polieren oder Bohren und gegebenenfalls Farbgebung nach Variante c),
VIII. Sinterbrand bei 1150 bis 1600 °C, vorzugsweise 1300 bis 1450 °C, mit einer bevorzugten Haltezeit bei Sintertemperatur von 2 h bis 20 h, vorzugsweise 10 h, und besonders bevorzugt im Zwei-Stufen-Sinterverfahren mit einer der Haltezeit vorgelagerten kurzen Haltezeit von 1 min bis 30 min bei einer im Vergleich zur Sintertemperatur der Haltezeit um 30 K bis 100 K erhöhten Temperatur,
VIIIa) gegebenenfalls eine Bearbeitung der Keramik, zum Beispiel durch Fräsen, Schleifen, Polieren oder Bohren.

Insbesondere der Anwendung des Gelcastings wird in Verfahrensschritt IV eine nicht poröse Gießform aus Kunststoff oder Metall eingesetzt, die durch 3D-Druck hergestellt werden kann. In einer abgewandelten Variante des Prozesses kann auf die optionalen Teilschritte IIa, IIb und IVa verzichtet werden, wenn in Verfahrensschritt IV eine poröse Gießform, zum Beispiel aus Gips, verwendet wird.

Mit dem beschriebenen Prozess wurden fünf verschiedene Korundpulver mit einer Reinheit > 99,8 % erprobt. Die Pulver unterscheiden sich hinsichtlich der Partikelgröße der Korundpartikel. Die nachfolgende **Tabelle 1** gibt die mittlere Partikelgröße, basierend auf Herstellerangaben und Literaturwerten, an. Da die Bestimmung der mittleren Partikelgröße, je nach Messverfahren abweichende Ergebnisse liefern kann, ist zusätzlich noch die spezifische Oberfläche nach dem bekannten BET-Analyseverfahren zur Größenbestimmung von Oberflächen mit anzugeben.

**Tabelle 1**

| Korundsorte | Reinheit [%] | BET [m²/g] | Partikelgröße d50 [µm] |
|---|---|---|---|
| 1 | 99,9 | 6 | 0,5 |
| 2 | 99,99 | 15 | 0,12 |
| 3 | 99,99 | 14,5 | 0,2 |
| 4 | 99,99 | 20 | 0,15 |
| 5 | 99,8 | 7,8 | 0,5 |

Bei allen oben genannten fünf Korundsorten war bei Infiltration der Weißkörper nur eine dünne Oberflächenschicht gefärbt. Bei der Korundsorte 1 und der Korundsorte 5 waren hohe Sintertemperaturen von > 1600 °C notwendig und die Farben wirken weniger brilliant als bei den Korundsorten 2, 3 oder 4. Vermutlich aufgrund der hohen Opazität der Sorten 1 und 5 ist die Wirkung der weißen Hintergrundschicht nicht so gut sichtbar.

Bei der Korundsorte 1 wurde zum Teil eine ungleichmäßige, fleckige Färbung beobachtet. Insgesamt waren die Sorten 2, 3 und 4 gut geeignet zur Realisierung der Erfindung. Die Sorten 1 und 5 sind als nicht geeignet im Sinne der Erfindung anzusehen.

### Vergleichsbeispiele 1 bis 24:

Die Tabelle 2 gibt die Opazitäten verschiedener ungefärbter Korundkeramiksorten, hergestellt durch Gelcasting, und die jeweiligen Sintertemperaturen an. Die Aufheizrampe lag bei 5 K/min. Die MgO-Dotierung (MgO dot.) entspricht 0,03 Massen-%.

**Tabelle 2**

| Nr. | Korundsorte | Sintertemperatur [°C] / Haltezeit | Opazität [%] | Dicke [mm] |
|---|---|---|---|---|
| 1 | 1 | 1400 °C/5 min +1370 °C/10 h | 94,9 | 2,7 |
| 2 | 2 (MgO dot.) | 1500 °C/2 h | 83,5 | 2,3 |
| 3 | 3 (MgO dot.) | 1500 °C/2 h | 79,0 | 2,1 |
| 4 | 4 | 1330 °C/5 min +1280 °C/10 h | 76,9 | 2,4 |
| 5 | 4 | 1350 °C/ 5 min + 1300 °C/10 h | 75,7 | 1,6 |
| 6 | 4 (MgO dot.) | 1330 °C/ 5 min + 1280 °C/10 h | 74,5 | 2,5 |
| 7 | 4 (MgO dot.) | 1350 °C/ 10 h | 82,2 | 2,6 |
| 8 | 4 (MgO dot.) | 1400 °C/5 min + 1350 °C/10 h | 66,9 | 2,4 |
| 9 | 4 (MgO dot.) | 1400 °C/ 2 h | 83,4 | 2,7 |
| 10 | 4 (MgO dot.) | 1400 °C/ 10 h | 79,1 | 2,7 |
| 11 | 4 (MgO dot.) | 1500 °C/ 2 h | 89,7 | 2,7 |
| 12 | 5 | 1600 °C/ 2 h | 97,2 | 2,3 |
| 13 | 5 | 1670 °C/ 2 h | 95,4 | 2,3 |

Die Tabelle zeigt, dass die Opazität der ungefärbten Keramiken mit den Rohstoffen 1 und 5 > 95 % ist, während mit den Rohstoffen 2, 3 und 4 Opazitäten < 90, überwiegend im Bereich 75 bis 85 %, erreicht werden. Die Opazität wird im Wesentlichen durch Lichtstreuung verursacht, für ein vollständig transparentes Material wäre die Opazität nahe dem Wert 0. Bei gefärbten Materialien besteht die Opazität aus Streu- und Absorptionsanteilen.

Die Tabelle 3 gibt Farbwerte an, die mit den Rohstoffen 1 und 5 durch fünfminütige Infiltration mit Nitraten der angegebenen Konzentrationen erzielt wurden. Die Sinterung erfolgte mit einer Rampe von 5 K/min bis zur angegebenen Temperatur mit einer Haltezeit von zwei Stunden.

**Tabelle 3**

| Nr. | Rohstoff | Sinter-temperatur [°C] | Dotierung | Konz. [mol/l] | Dicke [mm] | Opazität | L* | a* | b* |
|---|---|---|---|---|---|---|---|---|---|
| 14 | 1 | 1640 | Co | 0,1 | 2,1 | 105,5 | 48,57 | -7,52 | -22,26 |
| 15 | 1 | 1640 | Cr | 0,1 | 1,4 | 98,6 | 64,33 | 22,53 | -6,61 |
| 16 | 1 | 1640 | Cr | 0,25 | 2,0 | 99,1 | 55 | 24,79 | -4,85 |
| 17 | 1 | 1640 | Cr | 0,5 | 2,0 | 104 | 50,28 | 23,94 | -4,6 |
| 18 | 5 | 1640 | Mn | 0,1 | 2,1 | 99 | 58,27 | 44,78 | 8,68 |
| 19 | 5 | 1670 | Co | 0,1 | 2,2 | 98,95 | 55,2 | -7,76 | -30,56 |
| 20 | 5 | 1670 | Cr | 0,25 | 2,3 | 100 | 51,9 | 25,41 | 10,68 |
| 21 | 5 | 1670 | Cr | 0,025 | 2,2 | 100 | 72,77 | 15,18 | 11,03 |
| 22 | 5 | 1670 | Ni | 0,25 | 2,3 | 100,4 | 63,85 | -21,98 | 12,45 |
| 23 | 5 | 1700 | Cr | 0,1 | 2,4 | 99,2 | 52,13 | 29,55 | 15,46 |
| 24 | 5 | 1750 | Ni | 0,125 | 2,7 | 99,2 | 59,56 | -19,68 | 19,58 |

### Beispiele 1 bis 4:

Die nachstehenden Beispiele geben eine allgemeine Beschreibung des verwendeten Prozesses an, ohne dass die Erfindung darauf eingeschränkt werden soll.

Feinkörniges synthetisches Korundpulver mit einer Reinheit von 99,99 % und einer mittleren Partikelgröße von 0,12 µm wird unter Zugabe von 0,02 Massen-% eines feinkörnigen synthetischen Spinellpulvers MgAl₂O₄ als Mg-Quelle in deionisiertem Wasser bei pH4, eingestellt mit verdünnter Salpetersäure, dispergiert und über Nacht mit einer Kugelmühle zusammen mit Korundmaterialien gemahlen. Danach wird die Suspension von den Mahlkugeln getrennt und die Monomere Methacrylamid und Methylen-bis-acrylamid im Masseverhältnis 1 : 8 zugesetzt, so dass der Feststoffgehalt 73 % und der Monomergehalt 3,5 % beträgt. Nach Zugabe von 0,5 % einer 1 %-igen Ammoniumperoxidisulfatlösung wird die Suspension bei zirka 200 mbar im Vakuum entgast und in eine verschließbare nichtporöse Gießform, die aus Kunststoff mit SLA-3D-Druck hergestellt wurde gegossen sowie bei 50 °C für 4 Stunden polymerisiert. Die Gelkörper werden entformt, gewaschen und getrocknet. Die Weißkörper werden bei 800 °C vorgebrannt und dann in Färbelösung für 5 bis 10 Minuten infiltriert. In der Färbelösung sind 0,1 Mol/Liter Chrom-(III)-nitrat-nonahydrat gelöst in 2 massen-%-iger Lösung aus Polyethylenglykol 300.000 in Wasser. Zu dieser Lösung wird eine Mischung aus 50 Volumen-% Polyethylenglykol 1000 und 50 Volumen-% Wasser zugegeben, so dass der Anteil dieser Komponente 20-Volumen-% beträgt.

Das infiltrierte Material wird bei zirka 1 Stunde bei 90 °C getrocknet und in Luft gesintert. Die Tabelle 4 gibt die Sintertemperaturen mit jeweils 2 Stunden Haltezeit bei der Endtemperatur, sowie die Dichte, Opazität und L*, a* und b* an.

**Tabelle 4**

| Nr. | Sinter-Temp. [°C] | DichteBereich [g/cm³] | Dicke [mm] | Opazität | L* | a* | b* |
|---|---|---|---|---|---|---|---|
| 1 | 1350 | 3,944 | 2,2 | 100,83 | 65,96 | 23,54 | 15,95 |
| 2 | 1400 | 3,981 | 2,1 | 96,45 | 49,51 | 31,35 | 17,63 |
| 3 | 1450 | 3,978 | 2,2 | 91,47 | 42,24 | 32,73 | 16,39 |
| 4 | 1500 | 3,981 | 2,2 | 91,59 | 42,45 | 30,86 | 15,77 |

Die Tabelle zeigt, dass bei 1400 °C Sintertemperatur eine deutliche Farbverschiebung eintritt, die mit einer Verringerung der Opazität und einem geringen Anstieg der Dichte verbunden ist. Eine weitere Erhöhung der Sintertemperatur bewirkt eine Verringerung der Opazität, ohne dass sich die Dichte wesentlich ändert.

### Beispiele 5 bis 8:

Die nachfolgenden Beispiele wurden, wie unter Beispiel 1 beschrieben, mit dem Ausgangsstoff Nr. 4 hergestellt, unter Verwendung von Färbelösungen der in der Tabelle 5 angegebenen Konzentrationen der jeweiligen Nitrate. Die Sinterung erfolgte bei 1350 °C mit 10 Stunden Haltezeit.

Die Proben wurden mit einer Diamantsäge aufgesägt, dabei zeigte sich, dass die gesinterten Keramiken trotz der geringen Dicke nicht vollständig durchgefärbt sind.

**Tabelle 5**

| Nr. | Farbe | Dotierung | Konz. [mol/l] | Dicke [mm] | Opazität | L* | a* | b* |
|---|---|---|---|---|---|---|---|---|
| 5 | Blau | Co | 0,1 | 1,5 | 98,78 | 42,52 | -12,37 | -17,76 |
| 6 | Rot | Cr | 0,1 | 1,8 | 91,75 | 45,11 | 36,39 | 19,47 |
| 7 | Koralle | Cr | 0,025 | 1,6 | 79,59 | 55,89 | 31,76 | 23,81 |
| 8 | Grün | Ni | 0,25 | 1,9 | 99,71 | 47,25 | -16,1 | 18,81 |

Die nachfolgenden Beispiele wurden wie unter Beispiel 5 bis 8 beschrieben hergestellt, allerdings wurden nicht die Weißkörper infiltriert, sondern die Gelkörper direkt nach dem Entformen für 20 Stunden in einer Lösung der Nitrate der in der Tabelle angegebenen Konzentration in Wasser getaucht. Die Sinterung erfolgte bei 1350 °C mit 10 Stunden Haltezeit.

Die Proben wurden mit einer Diamantsäge aufgesägt. Dabei zeigte sich, dass die gesinterten Keramiken im Gegensatz zu den Beispielen 5 bis 8 vollständig durchgefärbt sind.

### Beispiele 9 bis 12:

Im Vergleich zu den Beispielen 5 bis 8 zeigen die Beispiele 9 bis 12, wie in Tabelle 6 ersichtlich, unter Berücksichtigung gegebenenfalls etwas unterschiedlicher Dicken insgesamt geringere Opazitäten und geänderte Farbwerte, weil bei den Beispielen 5 bis 8 der nicht vollständig durchgefärbte Kern eine zusätzliche Weiß-/Gelbkomponente bereitstellt.

**Tabelle 6**

| Nr. | Farbe | Dotierung | Konz. [mol/l] | Dicke [mm] | Opazität | L* | a* | b* |
|---|---|---|---|---|---|---|---|---|
| 9 | Blau | Co | 0,1 | 2,0 | 98,72 | 40,19 | - 10,64 | - 13,08 |
| 10 | Rot | Cr | 0,1 | 1,7 | 83,05 | 37,34 | 33,66 | 15,28 |
| 11 | Koralle | Cr | 0,025 | 1,5 | 73,53 | 49,32 | 35,65 | 24,67 |
| 12 | Grün | Ni | 0,25 | 1,4 | 92,27 | 40,1 | -22,16 | 11,05 |

### Beispiele 13 bis 16:

Der Keramik-Suspension aus Korundrohstoff 4 wurde vor der Mahlung 0,16 Massen-%, bezogen auf den Korundgehalt, eines TiO₂-Nanopulvers vom Typ Aeroxid P25 der Firma Evonik mit einer Primärpartikelgröße von 25 nm zugesetzt. Die Suspension enthielt kein Mg-Spinell. Die Weißkörper wurden mit Färbelösungen der in Tabelle 7 angegebenen Konzentrationen für 5 Minuten infiltriert und bei 1350 °C mit 10 Stunden Haltezeit gesintert. Das TiO₂ erhöht die Opazität durch die Streuwirkung der TiO₂-Partikel in der Keramik. Der Weißanteil kann somit durch die Konzentration der TiO₂-Partikel eingestellt werden.

**Tabelle 7**

| Nr. | Farbe | Dotierung | Konz. [mol/l] | Dicke [mm] | Opazität | L* | a* | b* |
|---|---|---|---|---|---|---|---|---|
| 13 | Rot | Cr/Co | 0,05/0,0375 | 2,2 | 101,32 | 47,5 | 23,24 | 5,09 |
| 14 | Violett | Cr | 0,25 | 2,2 | 97,72 | 54,79 | 24,1 | - 4,25 |
| 15 | Rosa | Cr | 0,025 | 2,2 | 97,37 | 76,46 | 11,88 | - 4,68 |
| 16 | Grün | Ni | 0,25 | 2,2 | 100,5 | 38,89 | - 6,1 | 12,12 |

### Beispiele 17 bis 27:

Die Suspensionen wurden wie in den Beispielen 5 bis 8 beschrieben hergestellt, allerdings ohne Mg-Spinell als Mg-Quelle für die Ausbildung von Farbzentren. Die Farben sind dadurch weniger gelblich und die Opazität ist etwas höher.

**Tabelle 8**

| Nr. | Farbe | Dotierung | Konz. [mol/l] | Dicke [mm] | Opazität | L* | a* | b* |
|---|---|---|---|---|---|---|---|---|
| 17 | Blau | Co | 0,05 | 1,61 | 97,22 | 55,19 | - 25,66 | - 3,67 |
| 18 | Rot | Cr | 0,25 | 1,87 | 96,51 | 50,61 | 27,22 | - 5,77 |
| 19 | Rosa | Cr | 0,025 | 1,49 | 84,1 | 71,21 | 14,38 | - 5,13 |
| 20 | Grün | Ni | 0,5 | 1,48 | 96,34 | 37,12 | - 23,19 | 6,2 |
| 21 | Braun | Ni/Cr | 0,0125/0,05 | 1,40 | 96,41 | 55,1 | 7,34 | 23,91 |
| 22 | Grau | Cr/Co | 0,05/0,0125 | 1,45 | 91,08 | 60,02 | 2,06 | - 1,8 |
| 23 | Gelb | Ni | 0,062 | 2,3 | 91,38 | 73,16 | - 4,38 | 41,68 |
| 24 | Rot | Mg/Mn | 0,1/0,1 | 1,8 | 85,5 | 44,94 | 29,46 | 17,05 |
| 25 | Rot | Mn/Fe | 0,1/0,1 | 1,4 | 92,6 | 52,39 | 40,62 | 7,17 |
| 26 | Braun | Ni/Mn | 0,025/0,05 | 1,6 | 95,5 | 48,09 | 19,13 | 16,09 |
| 27 | Rosa | Er | 0,5 | 1,7 | 91,5 | 75,67 | 18,12 | 2,35 |

## Patentansprüche

1. Gefärbte technische Korund-Keramik mit einer durch farbgebende, Licht absorbierende Dotierungen gebildeten Farbkomponente der Farbe, die sich zumindest innerhalb einer Oberflächenschicht der Korund-Keramik befindet, und einer unterhalb der Farbkomponente liegenden Weißkomponente der Farbe, wobei die gefärbte Korund-Keramik eine Dichte von 99,3 bis 99,9 %, bezogen auf die Dichte einer porenfreien Keramik der entsprechenden Zusammensetzung als 100 %, aufweist, enthaltend 0,001 Massen-% bis 0,5 Massen-% der farbgebenden, Licht absorbierenden Dotierungen für die Farbkomponente sowie 0,1 bis 0,7 Volumen-% Streuzentren, die aus Poren und/oder Partikeln gebildet sind, wobei der Brechungsindex der Streuzentren vom Brechungsindex der die Streuzentren umgebenden Bereiche der Korund-Keramik abweicht, und wobei die Streuzentren die Weißkomponente der Farbe bereitstellen.

2. Gefärbte technische Korund-Keramik nach Anspruch 1, **dadurch gekennzeichnet, dass** die Weißkomponente durch Streuzentren aus Poren und/oder Partikeln der Größe 10 nm bis 200 nm, vorzugsweise 20 nm bis 100 nm, gebildet ist.

3. Gefärbte technische Korund-Keramik nach Anspruch 2, **dadurch gekennzeichnet, dass** zumindest ein Teil der Streuzentren durch nicht absorbierende Fremdpartikel, wie zum Beispiel aus ZrO₂, TiO₂, Y₂O₃ und La₂O₃, gebildet wird.

4. Gefärbte technische Keramik nach einem der Ansprüche 1 bis 3, **dadurch gekennzeichnet, dass** die Korund-Keramik eine zusätzliche, durch Gitterdefekte im Korund-Gitter (F-Zentren) gebildete Gelbkomponente umfasst.

5. Gefärbte technische Korund-Keramik nach Anspruch 4, **dadurch gekennzeichnet, dass** die Gelbkomponente durch Magnesiumionen, vorvorzugsweise mit Anteilen im Bereich von 0,0001 bis 0,2 Massen-%, besonders bevorzugt im Bereich von 0,001 bis 0,1 Massen-%, im Korund-Gitter erzeugt ist.

6. Gefärbte technische Korund-Keramik nach einem der Ansprüche 1 bis 5, **dadurch gekennzeichnet, dass** die Weißkomponente und/oder die Gelbkomponente gleichmäßig homogen in der keramischen Struktur verteilt ist und sich eine durch die farbgebenden, Licht absorbierenden Dotierungen gebildete Farbschicht an der Oberfläche befindet.

7. Gefärbte technische Korund-Keramik nach einem der Ansprüchen 1 bis 6, **dadurch gekennzeichnet, dass** als farbgebende Ionen Kobalt-Ionen oder Nickel-Ionen oder Chrom-Ionen oder Mischungen mindestens zwei dieser Ionenarten enthalten sind.

8. Gefärbte technische Korund-Keramik nach Anspruch 7, **dadurch gekennzeichnet, dass** die farbgebenden Ionen durch weitere Metall-Ionen, jeweils ausgewählt aus der Gruppe von Magnesium-, Mangan-, Eisen-, Vanadium-, Praseodym-, Neodym-, Europium-, Erbium-, Thulium-, Ytterbium-, Dysprosium-, Holmium-Ionen, ergänzt sind.

9. Verfahren zur Herstellung gefärbter technischer Korund-Keramik nach einem der Ansprüche 1 bis 8, umfassend die Schritte
I. Herstellung einer Suspension, enthaltend Korundpulver einer mittleren Korngröße von 0,05 bis 0,5 µm und Reinheit von > 99,9 %,
II. Dispergierung des Korundpulvers, vorzugsweise durch Mahlung der Suspension mit Mahlkugeln,
III. Filtration und Entgasung der Suspension mit Unterdruck,
IV. Gießen der Suspension in Gießform mit Kavität,
V. Entformung eines in der Gießform gebildeten Rohlings,
VI. Trocknung des Rohlings,
VII. Vorbrand des getrockneten Grünkörpers bei 400 °C bis 1000 °C und
VIII. Sinterbrand bei 1150 bis 1600 °C, vorzugsweise 1300 °C bis 1450 °C,
wobei die farbgebenden, Licht absorbierenden Dotierungen a) durch Zugabe von Oxiden oder Salzen zur Suspension in Schritt I. und/oder b) durch Infiltration mit wässrigen Lösungen farbgebender Ionen unmittelbar nach der Entformung des Rohlings in Schritt V. und/oder c) durch Infiltration der vorgebrannten Keramik mit Lösungen farbgebender Ionen in die Keramik eingebracht werden.

10. Verfahren nach Anspruch 9, **dadurch gekennzeichnet, dass** in Schritt I. ein Korundpulver einer Reinheit größer 99,9 % mit einer mittleren Korngröße von 0,1 bis 0,25 µm eingesetzt wird.

11. Verfahren nach Anspruch 9 oder 10, **dadurch gekennzeichnet, dass** die in Schritt I. hergestellte Suspension Stabilisatoren und Hilfsmittel, vorzugsweise zur Regelung des pH-Wertes, der Oberflächenspannung, der UV-Absorption und/oder der Stabilisierung dispergierter Partikel, maximal 0,2 Volumen-% lichtstreuende Zusätze, bezogen auf das Volumen des eingesetzten Korundes, sowie 0 bis 0,1 Massen-% Magnesium in Ionenform oder als magnesiumhaltige Verbindung, bezogen auf die Masse des eingesetzten Korundes, enthält.

12. Verfahren nach einem der Ansprüche 8 bis 11, **dadurch gekennzeichnet, dass** ein Gelcasting-Verfahren zur Anwendung kommt, bei der der Suspension nach der Dispergierung in Schritt II. Monomere als organische Gelbildner zugesetzt werden, und das Gießen der Suspension in Schritt IV in eine Gießform erfolgt, welche vorzugsweise durch 3-D-Druck hergestellt wurde.

13. Verfahren nach einem der Anspruch 12, **dadurch gekennzeichnet, dass** die Infiltration durch Lösungen farbgebender Ionen in Wasser erfolgt, nachdem der Gelkörper in Schritt V. aus der Gießform entnommen wurde.

14. Verfahren nach Anspruch 12, **dadurch gekennzeichnet, dass** die Infiltration nach dem Vorbrand in Schritt VII. durch Lösungen farbgebender Ionen in einem Lösungsmittel, welches weiterhin Mittel zur Einstellung der Viskosität und zur Stabilisierung der Lösungen enthält, erfolgt, nachdem die organischen Gelbildner bei 400 bis 1000 °C entfernt wurden.

15. Verfahren nach einem der Ansprüche 9 bis 14, **dadurch gekennzeichnet, dass** die Lösungen farbgebender Ionen aus einem Satz von verschiedenen Keramik-Färbelösungen entnommen werden, wobei als farbgebende Ionen in den Keramik-Färbelösungen Kobalt-Ionen oder Nickel-Ionen oder Chrom-Ionen oder Mischungen dieser Ionen enthalten sind.
